# EUROPEAN PATENT SPECIFICATION

(11) **EP 4 064 850 B1**
(45) Date of publication and mention of the grant of the patent: **10.04.2024**
(21) Application number: 20816921.9
(22) Date of filing: 27.11.2020
(51) Int. Cl.: A23G 1/30, A23G 3/34, A23G 9/32, A23G 9/48, A23P 20/10

(54) **COMPOSITION FOR COATING FROZEN CONFECTIONERY AND A PROCESS FOR MANUFACTURING SAME**
ZUSAMMENSETZUNG ZUR BESCHICHTUNG VON GEFRORENEN SÜSSWAREN UND VERFAHREN ZUR HERSTELLUNG DAVON
COMPOSITION POUR L'ENROBAGE DE CONFISERIE GLACÉE ET SON PROCÉDÉ DE FABRICATION

(30) Priority: 27.11.2019 US 201962941321 P
(43) Date of publication of application: 05.10.2022
(73) Proprietor: Société des Produits Nestlé S.A., 1800 Vevey (CH)
(72) Inventor: NAPOLITANO, Guillermo E., Bakersfield, CA 93311 (US)
(74) Representative: Slaven, John William
(86) International application number: PCT/EP2020/083595
(87) International publication number: WO 2021/105333

(56) References cited:
- EP-A1- 1 040 760
- US-A1- 2003 175 385
- US-A1- 2005 037 111

## Description

### Field of the invention

The present invention relates to a composition for coating a frozen confection, in particular to a composition for a ganache type coating. The invention also relates to a method for making the coating composition.

### Background

Coated frozen confections are products, which are highly appreciated by consumers. Texture and nutritional profile of the coating are drivers for consumer preference.

Ganache coatings are well known in the confectionery industry due to the soft and creamy texture. Applying the ganache coating to frozen confection raises a number of difficulties due to the soft product surface. For example, solidification of the coating has required a long setting time. Furthermore, packing the product without influencing coating appearance has been difficult.

US2003175385 discloses a packaged frozen product, comprising (a) an edible frozen matrix, and (b) a fat based ganache coating comprising 1) a compound coating, 2) an edible oil, and 3) water that is applied to at least one surface of said edible frozen matrix. The fat based ganache coating has a penetration hardness at -5°C and from about 4,400 to about 12,000 grams of force. The coating described in US2003175385 provides a snapping sound and its surface cracks when cut with an utensil. The coating is said to prevent crystal formation in the ice cream, which can then be made without stabilizers.

EP1040760 discloses a water-containing soft creamy composition for coating or enrobing ice confectionery products which is prepared by forming an emulsion of cream and milk solids with a vegetable oil and butter fat and an emulsifier system and mixing melted chocolate into the emulsion. The composition may be used to form a layer or inclusion in an ice confectionery product. The inclusion of water requires the use of an emulsifier system, which may not be desirable. Furthermore, water-containing emulsions have shorter shelf-life and are prone to separation and are preferably blended at the point of use.

Food emulsion and dispersions containing water and oils are physically and chemically unstable. The water and oil phases in the food components tend to separate over time. Oils, in particular those oils with high nutritional value, rapidly oxidize during handling, storage, and during the shelf life of the product.

The fat phase in ice cream coatings and in most foods is added in the form of refined and highly processed vegetable oil. Oil dispersed or emulsified in a continuous water phase also needs emulsifiers, antioxidants and other additives to achieve the necessary physical and chemical stability of the system. As a result, physical and chemically stable food emulsion or dispersion obtained using conventional procedures and ingredients are not compatible with current definitions and trends of "all-natural" or "clean label".

There is a need for a coating with soft sensation and texture similar to a ganache. A ganache type coating is soft, without snappy or crisp texture. Furthermore, the coating needs to be usable on standard coating/dipping equipment used in industrial ice cream production.

There is a need to overcome at least some of the aforementioned problems whilst providing frozen confectionery coatings with desirable rheological properties in form of the drying and setting properties whilst maintaining desired organoleptic properties of a ganache coating.

Furthermore, there is a need for an all-natural frozen confectionery coating which is free from emulsifiers and easy to manufacture.

### Object of the invention

It is thus the object of the present invention to provide a ganache type coating for frozen confectionery products, in particular with a soft texture. Current products have coatings that are either brittle and set; or soft and do not setting under normal manufacturing conditions.

A second object of the present invention is to provide a low fat coating composition for frozen confectionery free of emulsifier. In particular, a coating which is microbiologically stable.

### Summary of the invention

According to a first aspect the invention relates to a composition for coating a frozen confection, the composition comprising, expressed in weight % (based on the total weight of the coating),
23.5 - 42 wt. % of total fat,
20 - 60 wt. % water, and wherein
10 - 20 wt. % of the fat is oil bodies.

The present invention provides a low fat coating composition with a natural source of emulsion. Furthermore, the coating composition according to the invention has no need for added emulsifiers to remain a stable emulsion and can be prepared without homogenization step in the manufacturing process.

It has been found that the coating is solid-like at temperatures used for ice cream storage and distribution but during consumption it is soft.

The coating obtained with the composition according to the invention has a soft sensation and texture similar to a ganache. In comparison to standard compound coatings used in frozen desserts with a snappy and crisp texture the present invention of a ganache type coating was found to be significantly soft by a sensory panel.

In a second aspect, the invention relates to a process for producing a coating composition according to claims 3-10, wherein said process comprising the steps:
providing the chocolate, oil bodies and water,
diluting the oil bodies in water to form a suspension,
heating the suspension to at least 90°C,
adding and mixing the chocolate to the suspension,
heating the suspension to at least 90°C for at least 5 minutes, and
cooling the suspension.

In further aspects, the invention relates to a process for producing an at least partly coated frozen confection and a process comprising providing a coating composition according to any of the preceding claims and coating a frozen composition.

### Detailed description of the invention

The invention relates to a composition for coating a frozen confection, the composition comprising expressed in weight % (based on the total weight of the coating), 23.5 - 42 wt. % of total fat, 20 - 60 wt. %, preferably 20 - 40 wt. % water, more preferably 30 - 40 wt. % water, and wherein 10 - 20 wt. % of the fat is in form of oil bodies.

### Oil Bodies

The fat in the seeds of oilseed crops, such as soy bean, rapeseed (canola), sunflower and coconut is naturally emulsified in discrete subcellular structures known as oil bodies (alternatively oleosomes, lipid bodies or spheresomes). The fat is encapsulated by a monolayer of phospholipids in which proteins (known as oleosins) are embedded. The extraction of oil bodies from a range of plant seeds is known in the art, for example Deckers et al. (US 6,146,645) and Wakabayashi et al. (EP 0 883 997).

In the present context, the term 'oil body' refers to the lipid-oleosin protein complex. The term 'oil body' does not include the oil droplets in conventional ice cream emulsions in which the fat is emulsified with emulsifiers and / or proteins (such as mono-/di-glycerides and milk proteins) that are not present in the seeds.

In mature seeds, oil in seeds are encapsulated within micron-sized oil bodies. Without wishing to be bound by theory, the present invention uses these oil bodies extracted with water, from seeds (oil seeds and nuts) as a pre-formed oil in water emulsion. These oil bodies consist of a lipid core surrounded by a phospholipid layer and a coat of oleosin protein. The outer coat of the oil body naturally provides physical stability of the emulsion and protection against external oxidizing agents.

Conventional ice cream coating are frozen confections with high levels of fat and sugar. Due to nutrition and health considerations, there have been a number of development projects for the reduction of total fat, saturated fat and sugar in both ice cream and coatings. Complementarily to reducing or removing undesirable ingredients is the aim to add functional ingredients with a positive consumer perception without negatively affecting the ingredient declaration. The present invention provides a solution for a clean label frozen confectionery coating where the added fat is replaced by a naturally occurring oil in water emulsion in the form of oil bodies or oleosomes. Oil bodies are water extracted from seeds and nuts (e.g., almonds, coconut, sunflower) and do not require the use of emulsifiers, oil antioxidants and stabilizers. It has been found that oil bodies provide stability to the water and oil emulsion and provides an emulsion which remains stable and can be prepared without a homogenization step in the manufacturing process.

According to the invention the contain composition comprises 20 - 60 wt. % water, preferably 20 - 40 wt. % water, more preferably 30 - 40 wt. % water. It has been found that with more than 60 wt. % water in the coating composition the coating will be thin and produce an incomplete cover of a frozen confectionery bar. Below 20 wt. % water in the coating composition the effect is opposite and the coating gets too thick and is difficult to apply and process.

It is preferred to use the oil bodies comprising 15 - 65 wt. % oil, preferably 20 - 60 wt. %, more preferably 25 wt. % oil in the coating composition. This provides good processing properties and suitable sensory attributes.

In a preferred embodiment of the invention, the composition comprises 45 - 55 wt. % of chocolate or compound. Preferably, the chocolate or compound comprises 30 - 40 wt. % fat.

Advantageously, the oil bodies derive from the group consisting of soybean, rapeseed, sunflower, safflower, hazelnut, almond, cashew nut, hemp and coconut. In a particular preferred embodiment of the invention, the oil bodies are derives from almonds, coconut cream or a combination thereof.

When coconut cream is used in the coating composition according to the invention, it is preferred that the coconut cream comprises 20 - 25 wt. % oil, preferably 22 wt. % oil. This oil concentration provides appropriate process-ability of the product, suitable sensory characteristics and requires minimal or no dilution of the coconut cream before use.

According to the invention, it is important that there is the correct ratio between fat coming from the chocolate or compound coating to achieve the necessary process needs and the expected sensory attributes of a chocolate or compound coatings.

In a preferred embodiment of the invention all the water is coming from coconut cream. Furthermore, all the fat is added as cocoa butter in the chocolate and the remaining fat included comes from the oil bodies. This provides a stable emulsion, which may be applied to frozen confection in a thin layer while not raising any issues of microbial stability.

In the present context, real "chocolate" refers to a product or ingredient that satisfies a standard of identity for chocolate. Preferably the chocolate used in the present invention is a real chocolate in the sense of the Directive 2000/36/EC of the European Parliament and of the Council of 23 June 2000 relating to cocoa and chocolate products intended for human consumption, i.e. it contains no vegetable fat except for the cocoa butter and a limited proportion of other authorized vegetable oils. Compared to the frequently used and cheaper fat-based materials, real chocolate has a better taste and a higher quality. As cocoa butter has a melting point of 34°-38°C, the melting point of the chocolate forming the layers is lying above 34°C. This is relatively high compared to fat-based materials which are frequently used for forming inclusions or crunchy layers in ice confections, and which have a melting point of around 24°C (corresponding to the melting point of coconut oil which is often added in fat-based chocolate compositions used in ice confectionery products). A coating of real chocolate having the same thickness will be perceived as more crunchy and crispy than a similar layer of fat-based material. However, due the high melting point, it is more difficult to work with real chocolate when making frozen confectionery products, as clumping and forming of excessively thick layers is frequent. In a compound coating cocoa butter is replaced by other vegetable fats.

Normally a coating formulated to be soft, oils (such as a coating with soybean oil) would be too soft and would not set quickly enough in standard industrial dipping line resulting in smear and uneven/ drip covering of the surface. Further, the coating composition may not adhere sufficiently to the surface of the frozen product. Typically, the blend of oils used in a conventional coating is formulated with a solid fat content of ~70% at 0 °C, to be hard and brittle and will not have the needed soft texture.

Preferably, the coating composition according to the invention comprises no structuring agent.

It is preferred that the coating material is maintained at 32 - 43°C (90 - 110 °F) to retain the optimal viscosity for regulating the pick-up weight and to enable a uniform and smooth coating on the finished product. The coating according to the invention typically sets and solidifies in approximately 30 seconds.

The ganache type coating composition according to the invention comprises 23.5 - 42 wt. %, preferably 25 to 35 wt% of fat. This range of fat content is preferred, as it contributes to achieve appropriate viscosity and preferred thickness of coating in frozen confections, e.g. 0.4 to 1.2 mm.

An embodiment of the coating composition according to the invention comprises 20 - 60 wt% water and 25 - 30 wt% of non-fat solids. The non-fat solids are preferably selected from the group consisting of: sugar, fibres, cocoa powder, milk powder, nutmeat and one or more flavours. The non-fat solids provide structure, flavour and colour to the coating.

In the present context, the fat phase includes the fat from chocolate and/or compound and from the oil bodies (e.g. coconut or almond cream). The fat in these components is calculated into the amounts of fat in the composition.

In the present context, ganache is a term that describes a rich and creamy topping made with chocolate and heavy cream. It can be used in the centres of truffles, as a glaze over cake, or it can be whipped for use as a filling and/or frosting. Traditionally, a ganache is made by heating cream and adding bits of chocolate. The mixture is then stirred until it becomes smooth. In the present invention, the dairy heavy cream is replaced by e.g. coconut or almond cream.

The frozen confection may be a portion, dome, bonbon, morsel, bar, stick or bar. It can be extruded or molded. The frozen confection may be provided with a stick for holding the product.

In a preferred embodiment of the invention, the coating composition comprises 20-35 wt. % sugar, preferably 22 - 30 wt. % sugar, 0 to 15 wt. % cocoa powder, preferably 5 to 10 wt. % cocoa powder, and 0 to 15 wt. % non-fat milk solids, preferably 5 to 10 wt.% non-fat milk solids.

In one embodiment of the invention, the coating composition comprises 1 to 20 wt. % non-fat milk solids.

For chocolate flavoured coating the amounts of non-fat cocoa solids in the coating composition is from 5 to 10 wt. %.

A preferred plastic viscosity of the coating composition has been found to be 200 to 800 centipoise (cps) (mPas) at 40°C. Below this value, the coating will be too thin, with a lower pick-up weight. With a thin coating, there would be a loss of desirable textural attributes. Above the indicated plastics viscosity range "pin holes" or uneven coating or lack of coating are likely to occur on the products to be coated.

The melting point of the fat phase of the coating has been found to be important for the coating to set well and however at the same time it should not be too waxy when consumed. It is preferred that the fat in the coating composition has a melting point of 30 to 36 °C. Below that temperature, it will have an oily mouthfeel of the coating and above that temperature, it will have a waxy sensorial properties. Waxy texture occurs when the melting point is above 36°C.

In a preferred embodiment, the composition according to the invention is free from emulsifiers. The oil bodies in the coating composition act as a natural source of emulsion.

Emulsifier can be used to further regulate the flow properties and the oil droplet size of the coating. If so, preferred emulsifiers are soy lecithin and/or sunflower lecithin/canola lecithin, as they are perceived as cleaner label. In a preferred embodiment of the invention, the composition is free from emulsifiers.

In an alternative embodiment of the invention, the coating composition is a fruit and water based coating composition.

The invention also relates to a process for producing a coating composition according to the invention. Embodiment of the coating compositions are described above. The process preferably comprises the steps mixing chocolate or a chocolate flavored compound with coconut or almond cream in approximately equal proportions.

In the present context particle, size may be determined using the Malvern particle sizer, with medium chain triglyceride oil as the dispersant. Particle size is analyzed at fraction less than 10 %, 50 %, 90 % and are calculated with the Malvern software based on the Mie theory. In the context of this application, the particle sizes are values at 90%. Equipment that may be used is a Chocolate Particle Size Analyzer such as a Malvern Mastersizer Micro with size range: 0.3 µm to 300 µm.

The invention also relates to a frozen confection with at least partly coated frozen confection with a composition to the invention. Preferably, the frozen confection according to the present invention may have a coating thickness from 0.4 to 1.2 mm.

The invention also relates to a method for producing a frozen confection, the method comprising providing a coating composition as described in this patent application and applying the method of preparation according to the invention described herein.

### Examples

### Examples of water based ice cream coatings made with oil bodies from almonds and coconuts

### Example 1

200 g of dark chocolate chunks (4-9 mm; 33% fat) were placed in a bowl.

400 ml of almond oil bodies (60% oil) were diluted with 400 ml of water and heated to 90° C to a total water content of 56%.

The hot and diluted oil body suspension was added to chocolate chunks and mixed manually until a homogeneous "ganache" coating was obtained.

The coating was heated to 90° C for five minutes to improve preservation during shelf life.

The mixture resulted in a total mass of coating of the composition below:

**Table 1. Break down composition for 1,000 g of coating in example 1.**

| | **Fat** | **Water** |
|---|---|---|
| Chocolate or compound (33% fat) | 66 g | - |
| Oil bodies (60% fat | 240 g | 160 g |
| Water | - | 400 g |
| Fat from oil bodies (% of total fat) | 78% | |
| Fat from oil bodies (% of coating) | 24% | |

### Ice cream bars were coated at 35-38° C. Coating weight was approx. 20 g/bar.

Samples of the coating were incubated for 7 days at 40° C or for 14 days at room temperature in sealed plastic containers.

The obtained coating passed a microbiological test.

### Microbiological testing:

100 g of ice cream coating was placed in a sealed sterile container and stored 14 days at 40 °C or 7 days at 40 °C. After the end of the storage period, the samples were sent to the microbiological lab for routine test for aerobic mesophilic and coliform bacteria. The test was the same for all the examples.

This example showed that a concentrated suspension of oil bodies from almonds is robust enough to stand heat treatment and perform well in an ice cream coating application.

### Example 2

200 g of dark chocolate chunks (4-9 mm; 33% fat)) were placed in a bowl.

200 ml of oil body emulsion from commercially available (retailer) coconut cream (22% oil) was heated to 90° C.

Hot coconut cream was added to chocolate chunks and mixed manually until homogeneous ganache coating was obtained.

The coating was heated to 90° C for five minutes to improve preservation during shelf life.

**Table 2. Break down composition for 400 g of coating in example 2.**

| | Fat | Water |
|---|---|---|
| Chocolate or compound (33% fat) | 66 g | - |
| Oil bodies (22 % fat | 44 g | 122 g |
| Water | - | 200 g |
| Fat from oil bodies (% of total fat) | 40 % | |
| Fat from oil bodies (% of coating) | 11 % | |

### Ice cream bars were coated at 35-38° C. Coating weight was approx. 20 g/bar.

Samples of the coating were incubated for 7 days at 40° C or for 14 days at room temperature in sealed plastic containers.

The coating passed a microbiological test.

This example showed that a diluted suspension of oil bodies from coconut is robust enough to stand heat treatment and perform well in an ice cream coating application.

### Example 3

200 g of dark chocolate chunks (4-9 mm; 33% fat) were placed in a bowl.

200 ml of an oil body emulsion from commercially available (retailer) coconut cream (22% oil) was heated to 90° C.

Hot coconut cream was added to chocolate chunks and mixed manually until homogeneous ganache coating was obtained.

Ice cream bars were coated at 35-38 C. Coating weight was approx. 20 g/bar.

Samples of the coating were incubated for 4 days at 40° C or for 7 days at room temperature in sealed plastic containers.

After incubation, the coating samples tested positive for aerobic mesophilic bacteria. The example showed that the coating made with oil bodies but without heat treatment did not pass the microbiological test.

The example showed that the coating made with oil bodies from almonds needs to be heat-treated to achieve shelf life stability and that the use of a commercial preservative does not prevent microbial growth

### Example 4

200 g of dark chocolate chunks (4-9 mm) were placed in a bowl.

200 ml of retailer's coconut cream (22% oil) was heated to 90° C.

Hot coconut cream was added to chocolate chunks and mixed manually until homogeneous ganache coating was obtained.

A nisin preparation Niprosin ^{©} (Profoods, USA) was added at 200 ppm of the coating as a natural antimicrobial agent for food preservation.

Ice cream bars were coated at 35-38° C. Coating weight was approx. 20 g/bar.

Samples of the coating were incubated for 4 days at 40° C or for 7 days at room temperature in sealed plastic containers.

After incubation, the coating samples tested positive for aerobic mesophilic bacteria.

The example showed that the coating made with oil bodies from coconut needs to be heat treated to achieve shelf life stability and that the use of a commercial preservative does not prevent microbial growth.

## Claims

1. A composition for coating a frozen confection, the composition comprising, expressed in weight % (based on the total weight of the coating), comprising
23.5 - 42 wt. % of total fat,
20 - 60 wt. % water, and wherein
10 - 20 wt. % of the fat is oil bodies.

2. A composition according to claims 1, wherein the oil bodies comprises 15 - 65 wt. % oil, preferably 20 - 60 wt. %, more preferably 25 wt. % oil

3. A composition according to any of the preceding claims, wherein the composition comprises 45 - 55 wt. % of chocolate or compound.

4. A composition according to claim 3, wherein the chocolate or compound comprises 30 - 40 wt. % fat.

5. A composition according to any of the preceding claims, wherein the composition has a plastic viscosity of 200 to 800 centipoise (cps) (mPas) at 40°C.

6. A composition according to any of the preceding claims, wherein the composition comprises 20 - 40 wt. % water, preferably 30 - 40 wt. % water.

7. A composition according to any of the preceding claims, wherein the oil bodies derives from the group consisting of soybean, rapeseed, sunflower, safflower, hazelnut, almond, cashew nut, hemp and coconut.

8. A composition according to claim 6, wherein the oil bodies derives from almonds, coconut cream or a combination thereof.

9. A composition according to claim 7, wherein the coconut cream comprises 20 - 25 wt. % oil, preferably 22 wt. % oil.

10. A composition according to any of the preceding claims, wherein the composition is free from emulsifiers.

11. A process for producing a coating composition according to any of claims 3-10, wherein said process comprising the steps:
providing the chocolate, oil bodies and water,
diluting the oil bodies in water to form a suspension,
heating the suspension to at least 90°C,
adding and mixing the chocolate to the suspension,
heating the suspension to at least 90°C for at least 5 minutes, and
cooling the suspension.

12. A process for producing an at least partly coated frozen confection, the process comprising providing a coating composition according to any of the preceding claims and coating a frozen composition.

13. A frozen confection at least partly coated with a composition according to any of claims 1 to 10.

## Patentansprüche

1. Zusammensetzung zum Beschichten eines gefrorenen Konfekts, die Zusammensetzung umfassend, ausgedrückt in Gew.-% (basierend auf dem Gesamtgewicht der Beschichtung), umfassend
zu 23,5 - 42 Gew.-% Gesamtfett,
zu 20 - 60 Gew.-% Wasser und wobei
10 - 20 Gew.-% des Fetts Ölkörper sind.

2. Zusammensetzung nach Ansprüchen 1, wobei die Ölkörper zu 15 - 65 Gew.-% Öl, vorzugsweise 20 - 60 Gew.-%, mehr bevorzugt 25 Gew.-% Öl, umfassen

3. Zusammensetzung nach einem der vorstehenden Ansprüche, wobei die Zusammensetzung zu 45 - 55 Gew.-% Schokolade oder eine Verbindung umfasst.

4. Zusammensetzung nach Anspruch 3, wobei die Schokolade oder Verbindung zu 30 - 40 Gew.-% Fett umfasst.

5. Zusammensetzung einem der vorstehenden Ansprüche, wobei die Zusammensetzung eine plastische Viskosität von 200 bis 800 Centipoise (cps) (mPas) bei 40 °C aufweist.

6. Zusammensetzung nach einem der vorstehenden Ansprüche, wobei die Zusammensetzung zu 20 - 40 Gew.-% Wasser, vorzugsweise zu 30 - 40 Gew.-% Wasser, umfasst.

7. Zusammensetzung nach einem der vorstehenden Ansprüche, wobei die Ölkörper von der Gruppe stammen, bestehend aus Sojabohne, Raps, Sonnenblume, Saflor, Haselnuss, Mandel, Cashewnuss, Hanf und Kokosnuss.

8. Zusammensetzung nach Anspruch 6, wobei die Ölkörper von Mandeln, Kokoscreme oder einer Kombination davon stammen.

9. Zusammensetzung nach Anspruch 7, wobei die Kokoscreme zu 20 - 25 Gew.-% Öl, vorzugsweise zu 22 Gew.-% Öl, umfasst.

10. Zusammensetzung nach einem der vorstehenden Ansprüche, wobei die Zusammensetzung frei von Emulgatoren ist.

11. Verfahren zum Herstellen einer Beschichtungszusammensetzung nach einem der Ansprüche 3 bis 10, wobei das Verfahren die Schritte umfasst:
Bereitstellen der Schokolade, Ölkörper und Wasser,
Verdünnen der Ölkörper in Wasser, um eine Suspension auszubilden,
Erwärmen der Suspension auf mindestens 90 °C,
Hinzufügen und Mischen der Schokolade zu der Suspension,
Erwärmen der Suspension auf mindestens 90 °C für mindestens 5 Minuten und Kühlen der Suspension.

12. Verfahren zum Herstellen eines mindestens teilweise beschichteten gefrorenen Konfekts, das Verfahren umfassend das Bereitstellen einer Beschichtungszusammensetzung nach einem der vorstehenden Ansprüche und das Beschichten einer gefrorenen Zusammensetzung.

13. Gefrorenes Konfekt, das mindestens teilweise mit einer Zusammensetzung nach einem der Ansprüche 1 bis 10 beschichtet ist.

## Revendications

1. Composition permettant d'enrober une confiserie congelée, la composition comprenant, exprimé en % en poids (sur la base du poids total de l'enrobage), comprenant
23,5 à 42 % en poids de matière grasse totale,
20 à 60 % en poids d'eau, et dans laquelle
10 à 20 % en poids de la matière grasse sont des corps lipidiques.

2. Composition selon les revendications 1, dans laquelle les corps lipidiques comprennent 15 à 65 % en poids d'huile, de préférence 20 à 60 % en poids, plus préférablement 25 % en poids d'huile

3. Composition selon l'une quelconque des revendications précédentes, dans laquelle la composition comprend 45 à 55 % en poids de chocolat ou composé.

4. Composition selon la revendication 3, dans laquelle le chocolat ou composé comprend 30 à 40 % en poids de matière grasse.

5. Composition selon l'une quelconque des revendications précédentes, dans laquelle la composition a une viscosité plastique de 200 à 800 centipoises (cP) (mPas) à 40 °C.

6. Composition selon l'une quelconque des revendications précédentes, dans laquelle la composition comprend 20 à 40 % en poids d'eau, de préférence 30 à 40 % d'eau.

7. Composition selon l'une quelconque des revendications précédentes, dans laquelle les corps lipidiques sont issus du groupe constitué de soja, colza, tournesol, carthame, noisette, amande, noix de cajou, chanvre et noix de coco.

8. Composition selon la revendication 6, dans laquelle les corps lipidiques sont issus d'amandes, crème de noix de coco ou une combinaison de celles-ci.

9. Composition selon la revendication 7, dans laquelle la crème de noix de coco comprend 20 à 25 % en poids de matière grasse, de préférence 22 % en poids de matière grasse.

10. Composition selon l'une quelconque des revendications précédentes, dans laquelle la composition est exempte d'émulsifiants.

11. Procédé de production d'une composition d'enrobage selon l'une quelconque des revendications 3 à 10, dans lequel ledit procédé comprend les étapes :
fournir le chocolat, les corps lipidiques et l'eau, diluer les corps lipidiques dans l'eau pour former une suspension, chauffer la suspension à au moins 90 °C, ajouter et mélanger le chocolat à la suspension, chauffer la suspension à au moins 90 °C pendant au moins 5 minutes, et refroidir la suspension.

12. Procédé de production d'une confiserie congelée au moins partiellement enrobée, le procédé comprenant la fourniture d'une composition d'enrobage selon l'une quelconque des revendications précédentes et l'enrobage d'une composition congelée.

13. Confiserie congelée au moins partiellement enrobée avec une composition selon l'une quelconque des revendications 1 à 10.
